# FASCICULE DE BREVET EUROPEEN

(11) **EP 3 000 291 B1**
(45) Date de publication et mention de la délivrance du brevet: **15.11.2017**
(21) Numéro de dépôt: 15187057.3
(22) Date de dépôt: 28.09.2015
(51) Int. Cl.: A01B 15/02, A01B 17/00

(54) **DISPOSITIF D'ENFOUISSEMENT POUR CHARRUE AVEC UN DISPOSITIF DE RÉGLAGE ANGULAIRE ET CHARRUE ÉQUIPÉE D'UN TEL DISPOSITIF**
VERGRABVORRICHTUNG FÜR EINEN PFLUG MIT WINKELSTELLEINRICHTUNG UND PFLUG MIT EINER SOLCHEN VORRICHTUNG
BURYING DEVICE FOR A PLOUGH WITH ANGULAR ADJUSTMENT DEVICE AND PLOUGH EQUIPPED WITH SUCH A DEVICE

(30) Priorité: 29.09.2014 FR 1459180
(43) Date de publication de la demande: 30.03.2016
(73) Titulaire: Kuhn-Huard S.A., 44142 Chateaubriant Cedex (FR)
(72) Inventeur: HERAULT, Vincent, 44470 Mauves sur Loire (FR)
(74) Mandataire: Esch, Esther Evelyne

(56) Documents cités:
- EP-A1- 2 314 139
- DE-U- 7 415 663
- FR-A1- 2 466 939

## Description

La présente invention se rapporte au domaine technique général du machinisme agricole et en particulier au domaine des charrues. L'invention concerne un dispositif d'enfouissement pour charrue agissant en coopération avec un corps de labour pour enfouir la végétation et les débris de surface dans le sillon de labour, le dispositif d'enfouissement comporte une tige de fixation et est monté directement ou indirectement sur le bâti d'une charrue au moyen d'un système de fixation comportant un fourreau et un élément de verrouillage permettant de solidariser la tige avec le fourreau en traversant au moins partiellement un logement, le logement initial est constitué par un trou ménagé dans la tige de fixation et par un trou d'indexage ménagé dans le fourreau, le système de fixation présente un réglage angulaire.

Un dispositif de ce type est décrit dans le document EP 2 314 139 A1**.** Ce dispositif d'enfouissement est destiné à être monté sur une charrue, il s'agit d'une rasette. La rasette est un équipement de la charrue qui agit devant le corps de labour pour favoriser l'enfouissement de la matière végétale et l'émiettement de la terre. La tige de la rasette est montée dans un fourreau et sa position est verrouillée par une goupille. Le système de fixation prévoit un réglage en hauteur pour enfouir plus ou moins profondément les résidus organiques et les mauvaises herbes. Le système de fixation prévoit également un réglage angulaire pour adapter l'orientation de la rasette en fonction de la vitesse d'avance. Le réglage en hauteur et le réglage angulaire sont indépendants, ainsi un réglage en hauteur ne modifie pas l'angle d'attaque. L'impact d'un réglage non optimal de l'aplomb, du déport ou du dévers sur une charrue, est direct sur le travail de la charrue et sur l'accroissement de l'effort de traction à fournir par le tracteur.

Pour obtenir un travail satisfaisant de la charrue, il est nécessaire d'obtenir un travail satisfaisant des rasettes. Ainsi, il est prévu de pouvoir modifier l'angle d'attaque des rasettes au moyen d'un coin. La modification de l'angle d'attaque est donnée par la présence du coin d'un côté ou de l'autre de la tige logée dans le fourreau. La rasette pourra seulement être orientée selon deux angles d'attaque. Dans certains cas ce réglage n'est pas suffisant puisque si la rasette fonctionne de manière incorrecte cela produit un mauvais enfouissement des résidus et par conséquent un travail de mauvaise qualité.

Il faudra dans certains cas se satisfaire d'un compromis entre une vitesse de labour plus ou moins élevée et un meilleur enfouissement de la matière végétale.

La présente invention a pour but de remédier aux inconvénients précités. Elle doit notamment proposer un dispositif d'enfouissement permettant d'obtenir un meilleur labourage dans toutes les conditions d'utilisation. Le dispositif de réglage angulaire devra être simple, rapide et facile à manipuler et plus économique.

A cet effet, une importante caractéristique de l'invention consiste en ce que le dispositif de réglage angulaire comprend au moins un logement complémentaire décalé en hauteur et angulairement par rapport au logement. Grâce à cette caractéristique, l'orientation du dispositif d'enfouissement est adaptée en fonction de la vitesse de labour et des conditions du terrain.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue de côté d'une charrue avec plusieurs dispositifs d'enfouissement conforme à l'invention,
- la **figure 2** représente une vue de côté du dispositif d'enfouissement selon l'invention avec un angle d'attaque nul,
- la **figure 3** représente une vue éclatée d'un dispositif d'enfouissement,
- les **figures 4** et **5** représentent une vue de côté de détail du système de fixation permettant un angle d'attaque positif respectivement négatif,
- la **figure 6** représente une vue de dessus d'une partie du corps de labour avec un dispositif d'enfouissement correspondant.

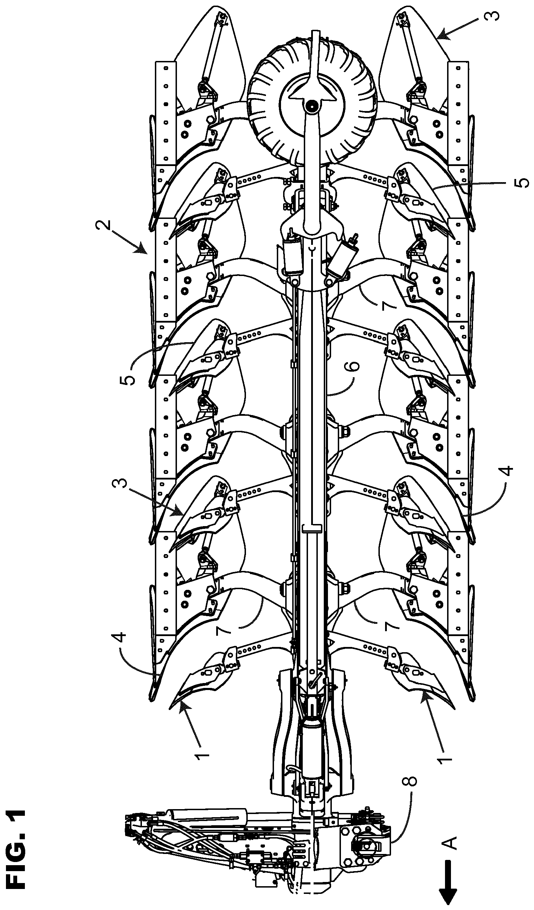

Sur la figure 1 apparaît un dispositif d'enfouissement (1) destiné à être monté sur une charrue (2). Le dispositif d'enfouissement (1) est un équipement de la charrue (2) utilisé pour améliorer l'enfouissement de matières présentes à la surface du sol. Le dispositif d'enfouissement (1) agit en coopération avec un corps de labour (3) pour enfouir la végétation et les débris de surface dans le sillon de labour. Un corps de labour (3) est traditionnellement composé d'un soc (4) et d'un versoir (5). La charrue (2) comporte un bâti (6) qui porte des corps de labour (3) au moyen d'age (7) respectif. La charrue (2) comporte une tête d'attelage (8) destinée à être reliée à un tracteur (non représenté). Le tracteur est amené à déplacer et à animer la charrue (2) suivant une direction d'avance indiquée par la flèche (A). Dans la suite de la description, les notions suivantes "avant", "arrière" et "devant", "derrière" sont définies par rapport au sens d'avance (A). La figure 1 illustre la charrue (2) portée dans une position de travail, la roue s'étend dans une position quelconque. Les corps de labour (3) sont des pièces travaillantes qui découpent, soulèvent et retournent la bande de terre. La charrue (2) est réversible. Les corps de labour (3) sont répartis suivant deux groupes, chacun est actif dans une position de travail respective. Ainsi, la charrue (2) comporte un dispositif de retournement permettant de relier le bâti (6) à la tête d'attelage (8). Sous l'action du dispositif de retournement, le bâti (6) passe d'une position de travail à une autre. Ainsi, les corps de labour droits et gauches sont mis successivement en service par rotation du bâti (6) d'un demi-tour correspondant à 180°.

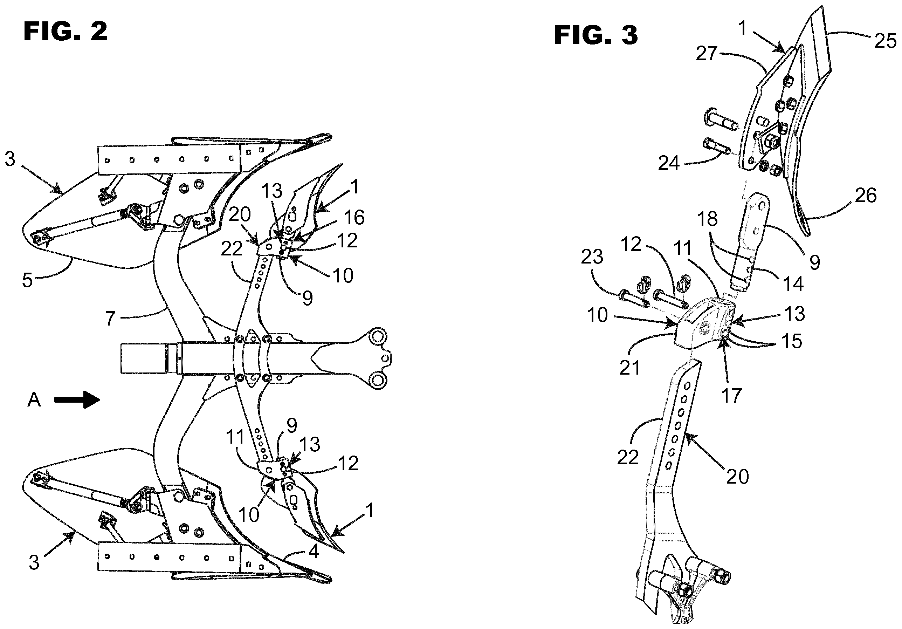

La figure 2 représente en vue de côté un ensemble composé d'un corps de labour gauche et d'un corps de labour droit, chacun précédé d'un dispositif d'enfouissement (1) selon l'invention. Le dispositif d'enfouissement (1) est fixé en avant et au-dessus du corps de labour (3). Il découpe la partie superficielle de la bande retournée par le corps de labour (3) et projette cette partie portant la végétation, les débris végétaux ou du fumier sur le flanc de la bande précédente et dans le fond de la raie. Le dispositif d'enfouissement (1) travaille devant l'arête latérale du versoir (5) afin d'éviter que la végétation ne vienne s'accrocher sur l'age (7) de la charrue (2). Le dispositif d'enfouissement (1) est déporté latéralement par rapport au corps de labour (3) avec lequel il coopère. Le dispositif d'enfouissement (1) comporte une tige de fixation (9) et est monté directement ou indirectement sur le bâti (6) de la charrue (2). Selon les figures, le dispositif d'enfouissement (1) est fixé sur l'age (7) portant le corps de labour (3) correspondant au moyen de boulons. La position du dispositif d'enfouissement (1) peut être réglée sur l'age (7) selon plusieurs positions de réglage. Ce réglage longitudinal modifie l'enfouissement de la végétation.

Le dispositif d'enfouissement (1) est monté sur la charrue (2) au moyen d'un système de fixation (10) tel que représenté dans la vue éclatée de la figure 3. Il comporte un fourreau (11) et un élément de verrouillage (12). L'élément de verrouillage (12) permet de solidariser la tige de fixation (9) avec le fourreau (11) en traversant au moins partiellement un logement (13). Le logement (13) est constitué par un avant-trou (14) ménagé dans la tige de fixation (9) et par un trou d'indexage (15) ménagé dans le fourreau (11). D'une manière avantageuse, le système de fixation (10) comporte un dispositif de réglage angulaire (16) permettant d'adapter l'angle d'attaque du dispositif d'enfouissement (1) aux conditions du terrain. L'angle d'attaque est défini entre la droite passant par l'arête de coupe du dispositif d'enfouissement (1) et la direction d'avance (A).

Selon une caractéristique importante de l'invention, le dispositif de réglage angulaire (16) comporte au moins un logement complémentaire (17) décalé en hauteur et angulairement par rapport au logement (13). Avec un tel dispositif de réglage angulaire (16), l'angle d'attaque du dispositif d'enfouissement (1) pourra être facilement adapté pour fournir un travail de bonne qualité en fonction de la vitesse de labour et des conditions du terrain. D'une manière avantageuse, le logement complémentaire (17) est constitué par un trou complémentaire (18) ménagé dans la tige de fixation (9) et par un trou de réglage (19) ménagé dans le fourreau (11). L'avant-trou (14) et le trou complémentaire (18) sont avantageusement alignés par rapport à l'axe de la tige de fixation (9). D'une manière avantageuse, le centre de l'avant-trou (14) et le centre du trou complémentaire (18) sont alignés sur l'axe de la tige de fixation (9). Le centre du trou d'indexage (15) et le centre du trou de réglage (19) sont disposés sur une droite inclinée par rapport à l'axe de la tige de fixation (9).

La figure 3 illustre une vue éclatée du montage de la tige de fixation (9) et du dispositif d'enfouissement (1) dans le système de fixation (10). La partie de la tige de fixation (9) destinée à coopérer avec le fourreau (11) possède une section transversale circulaire. La forme du fourreau (11) est complémentaire à celle de la tige de fixation (9). Le fourreau (11) présente une section transversale circulaire. La tige de fixation (9) et le fourreau (11) sont coaxiaux. L'élément de verrouillage (12) est composé d'une broche et d'une goupille automatique. La broche traverse le fourreau (11) et la tige de fixation (9) pour fixer le dispositif d'enfouissement (1). La broche est maintenue en position au moyen d'une goupille automatique pouvant être démontée sans outillage spécifique.

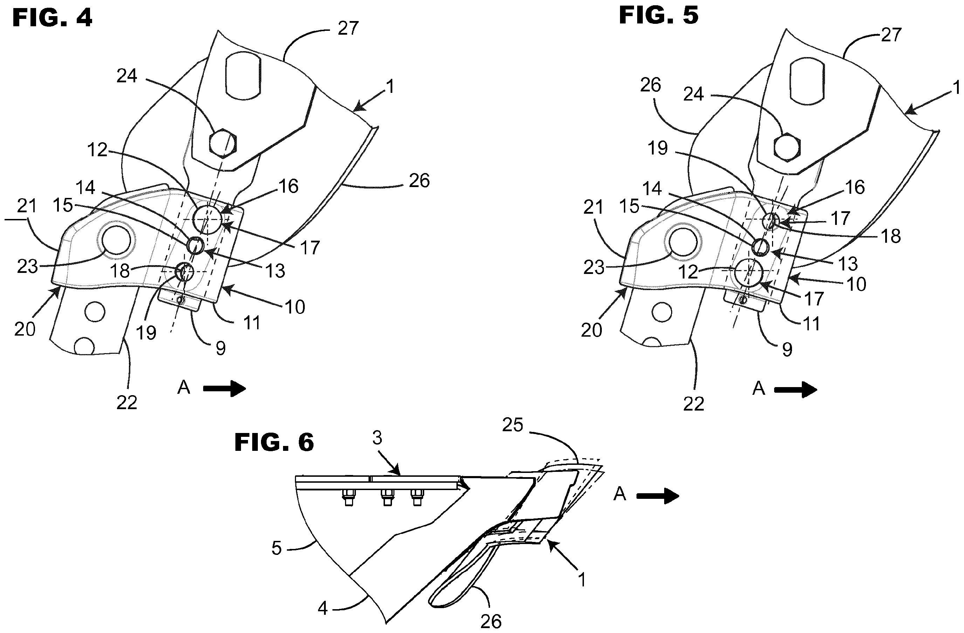

Lorsque l'élément de verrouillage (12) est placé dans le logement (13), l'angle d'attaque du dispositif d'enfouissement (1) est nul tel qu'illustré sur la figure 2. Lorsque l'élément de verrouillage (12) est placé dans le logement complémentaire (17), l'angle d'attaque du dispositif d'enfouissement (1) est positif (figure 4) ou négatif (figure 5) en fonction de la position du logement complémentaire (17) par rapport au logement (13). A la lumière des figures 4 et 5, on remarque que la droite passant par le centre du trou d'indexage (15) et le centre du trou de réglage (19) est inclinée vers l'avant par rapport à l'axe de la tige de fixation (9).

Selon une autre caractéristique de l'invention, le dispositif de réglage angulaire (16) comporte au moins deux logements complémentaires (17) disposés de manière décalés en hauteur et angulairement par rapport au logement (13). Le décalage angulaire du logement complémentaire (17) par rapport au logement (13) est compris entre 0° et 15°. La droite inclinée est orientée d'un angle compris entre 0° et 15° par rapport à l'axe de la tige de fixation (9).

D'après la réalisation illustrée sur les figures 2 à 5, le dispositif de réglage angulaire (16) comporte trois logements complémentaires (17) disposés de manière décalés en hauteur et angulairement par rapport au logement (13). Le logement (13) est disposé entre deux logements complémentaires (17). Le logement (13) définit un angle d'attaque nul et les logements complémentaires (17) définissent respectivement un angle d'attaque positif ou négatif. Tel que représenté sur la figure 4, lorsque l'élément de verrouillage (12) est placé dans le logement complémentaire (17) décalé en avant et au-dessus du logement (13), l'angle d'attaque du dispositif d'enfouissement (1) est positif. L'angle d'attaque du dispositif d'enfouissement (1) est négatif, lorsque l'élément de verrouillage (12) est placé dans le logement complémentaire (17) décalé en arrière et en dessous du logement (13). Ce réglage est illustré à la figure 5.

La modification de l'angle d'attaque du dispositif d'enfouissement (1) se fait en déplaçant l'élément de verrouillage (12) du logement (13) dans l'un des logements complémentaires (17). Ce réglage intervient uniquement par rapport à l'angle d'attaque du dispositif d'enfouissement (1), le réglage en hauteur du dispositif d'enfouissement (1) n'est pas modifié.

D'après les figures, le système de fixation (10) du dispositif d'enfouissement (1) prévoit un dispositif de réglage en hauteur (20). Ce réglage en hauteur permet de s'adapter à la profondeur de labour afin d'avoir une action optimale sur les résidus organiques et les mauvaises herbes dans le sol. Le dispositif de réglage en hauteur (20) est disposé sensiblement en arrière du dispositif de réglage angulaire (16) compte tenu de la direction d'avance (A). Le dispositif de réglage en hauteur (20) comporte, tel qu'illustré sur la figure 3, sept positions de réglage. Le dispositif d'enfouissement (1) est fixé et positionné sur l'age (7) via une chape (21). La chape (21) est maintenue sur le support (22) muni de trous par l'intermédiaire d'un tourillon (23). Le réglage en hauteur et le réglage de l'angle d'attaque peuvent être réglés indépendamment. Ainsi, un réglage en hauteur ne modifie pas le réglage angulaire, et inversement. Le réglage en hauteur comme le réglage angulaire se font rapidement puisqu'ils peuvent être réalisés sans outil. Le réglage effectué sur l'un des dispositifs d'enfouissement (1) pourra être simplement reproduit sur les autres dispositifs d'enfouissement (1) de la charrue (2). Dans le cas d'une charrue (2) réversible comprenant quatre corps de labour (3), il faut donc effectuer huit fois le réglage.

Pour une meilleure compréhension de l'invention, la figure 6 illustre selon une vue de dessus une partie du corps de labour (3) ainsi que le dispositif d'enfouissement (1) associé. Le soc (4) est protégé à l'avant par une pointe. La pointe améliore la capacité de pénétration du corps de labour (3) dans le sol. Le dispositif d'enfouissement (1) représenté en traits continus correspond au réglage selon la figure 2, l'angle est nul. Le dispositif d'enfouissement (1) représenté en traits mixtes correspond au réglage selon la figure 4. L'angle d'attaque du dispositif d'enfouissement (1) est positif. Le dispositif d'enfouissement (1) représenté en traits interrompus correspond au réglage selon la figure 5. L'angle d'attaque du dispositif d'enfouissement (1) est négatif.

Selon une alternative non représentée, ce sont les centres du trou d'indexage (15) et du trou de réglage (19) qui sont alignés sur l'axe de la tige de fixation (9) et ce sont les centres de l'avant-trou (14) et du trou complémentaire (18) qui sont disposés sur une droite inclinée par rapport à l'axe de la tige de fixation (9).

Dans une autre alternative, les centres de l'avant-trou (14) et du trou complémentaire (18) sont alignés sur une génératrice de la tige de fixation (9). Les centres du trou d'indexage (15) et du trou de réglage (19) sont décalés en conséquence pour réaliser le logement (13) ou le logement complémentaire (17).

Tel que représenté sur les figures, le dispositif d'enfouissement (1) est un petit corps de labour appelé rasette. La rasette est composée d'un soc (25) et d'un versoir (26) de dimension plus petite. Le soc (25) et le versoir (26) sont fixés sur un sep (27). La tige de fixation (9) est liée sur le sep (27). La rasette découpe en surface un petit volume de sol qui, projeté en fond de raie avant le passage du corps de labour (3), se retrouve sous la bande retournée par le versoir (5). Suivant son type et sa position, la rasette permet ainsi d'enfouir plus ou moins profondément les résidus organiques et les mauvaises herbes. Dans l'exemple représenté, le dispositif d'enfouissement (1) pivote autour de l'axe de la tige de fixation (9) pour le réglage de son angle d'attaque. Cet axe de rotation est proche de la pointe du soc (25). L'axe de la tige de fixation (9) est relativement proche de la pointe du dispositif d'enfouissement (1), ceci a pour avantage de limiter l'incidence sur l'ajustement latéral lors d'une intervention pour régler l'angle d'attaque. Le dispositif d'enfouissement (1) doit être ajusté latéralement par rapport au corps de labour (3) pour que son action soit efficace. D'après la figure 2, l'axe de rotation est avancé par rapport au support (22). Le dispositif d'enfouissement (1) est fixé sur l'age (7) par l'intermédiaire du support (22), lequel est boulonné sur l'age (7). Plus la pointe du dispositif d'enfouissement (1) est proche de l'axe de rotation, moins la position dans l'espace de la pointe du dispositif d'enfouissement (1) évolue par rapport au corps de labour (3).

D'une manière avantageuse, le dispositif d'enfouissement (1) est protégé par un boulon de rupture (24). Le boulon de rupture (24) permet de protéger le dispositif d'enfouissement (1) en cas de choc sur une pierre.

Dans un autre exemple de réalisation non représenté, le dispositif d'enfouissement (1) est un disque rotatif. Un tel dispositif d'enfouissement a pour fonction de couper les résidus à la surface de la terre à labourer afin d'enfouir des végétaux non broyés, par exemple des repousses. Il permet d'améliorer le positionnement et la répartition de la terre et des résidus sur toute la largeur de la raie de labourage ce qui est plus favorable à la décomposition des résidus et à leur enfouissement. Lorsque le dispositif d'enfouissement (1) est un disque rotatif, il est dépourvu de soc et de versoir.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Dispositif d'enfouissement (1) pour charrue (2) pouvant agir en coopération avec un corps de labour (3) pour enfouir la végétation et les débris de surface dans le sillon de labour, le dispositif d'enfouissement (1) comportant une tige de fixation (9) et pouvant être monté directement ou indirectement sur le bâti (6) d'une charrue (2) au moyen d'un système de fixation (10) comportant un fourreau (11) et un élément de verrouillage (12) permettant de solidariser la tige de fixation (9) avec le fourreau (11) en traversant au moins partiellement un logement (13), le logement (13) est constitué par un avant-trou (14) ménagé dans la tige de fixation (9) et par un trou d'indexage (15) ménagé dans le fourreau (11), le système de fixation (10) présente un dispositif de réglage angulaire (16), ***caractérisé en ce que*** le dispositif de réglage angulaire (16) comprend au moins un logement complémentaire (17) décalé en hauteur et angulairement par rapport au logement (13).

2. Dispositif selon la revendication 1, ***caractérisé en ce qu**'*au moins la partie de la tige de fixation (9) destinée à coopérer avec le fourreau (11) possède une section transversale circulaire.

3. Dispositif selon la revendication 1 ou 2, ***caractérisé en ce que*** le décalage angulaire du logement complémentaire (17) par rapport au logement (13) est compris entre 0° et 15°.

4. Dispositif selon l'une quelconque des revendications 1 à 3, ***caractérisé en ce que*** le logement complémentaire (17) est constitué par un trou complémentaire (18) et par un trou de réglage (19), les centres de l'avant-trou (14) et du trou complémentaire (18) sont alignés sur l'axe de la tige de fixation (9) ou sur une génératrice de la tige de fixation (9) et que les centres du trou d'indexage (15) et du trou de réglage (19) sont disposées sur une droite inclinée par rapport à l'axe de la tige de fixation (9).

5. Dispositif selon la revendication 4, ***caractérisé en ce que*** la droite passant par le centre du trou d'indexage (15) et le centre du trou de réglage (19) est inclinée vers l'avant par rapport à l'axe de la tige de fixation (9).

6. Dispositif selon l'une quelconque des revendications 1 à 5, ***caractérisé en ce que*** le dispositif de réglage angulaire (16) comporte au moins deux logements complémentaires (17) disposés de manière décalés en hauteur et angulairement par rapport au logement (13).

7. Dispositif selon la revendication 6, ***caractérisé en ce que*** le logement (13) est disposé entre deux logements complémentaires (17).

8. Dispositif selon l'une quelconque des revendications 1 à 7, ***caractérisé en ce que*** l'axe de la tige de fixation (9) est proche de la pointe du dispositif d'enfouissement (1).

9. Dispositif selon l'une quelconque des revendications 1 à 8, ***caractérisé en ce que*** le système de fixation (10) comporte un dispositif de réglage en hauteur (20) et que le dispositif de réglage angulaire (16) est actionnable indépendamment du dispositif de réglage en hauteur (20) en vue de régler, de manière indépendante la hauteur et l'angle d'attaque du dispositif d'enfouissement (1).

10. Dispositif selon la revendication 9, ***caractérisé en ce que*** le dispositif de réglage en hauteur (20) est disposé sensiblement en arrière du dispositif de réglage angulaire (16) compte tenu de la direction d'avance (A).

11. Charrue équipée à l'avant de chaque corps de labour (3) d'un dispositif d'enfouissement (1) selon l'une quelconque des revendications 1 à 10.

12. Charrue selon la revendication 11, ***caractérisée en ce* qu'**elle est réversible.

13. Charrue selon la revendication 11 ou 12, ***caractérisée en ce* qu'**elle comporte un bâti (6) portant des corps de labour (3) au moyen d'un age (7) respectif et que le dispositif d'enfouissement (1) est fixé sur l'age (7) via une chape (21) et un support (22).

## Patentansprüche

1. Einbettvorrichtung (1) für einen Pflug (2), die mit einem Pflugkörper (3) zusammenwirken kann, um Pflanzen und Ernterückstände von der Oberfläche in die Pflugfurche einzubetten, wobei die Einbettvorrichtung (1) einen Befestigungsstab (9) umfasst und direkt oder indirekt auf dem Gestell (6) eines Pflugs (2) mittels einer Befestigungsvorrichtung (10) angebracht werden kann, die eine Hülse (11) und ein Verriegelungselement (12) umfasst, das es ermöglicht, den Befestigungsstab (9) fest mit der Hülse (11) zu verbinden, indem zumindest teilweise eine Aufnahme (13) durchsetzt wird, wobei die Aufnahme (13) von einem Vorbohrloch (14) gebildet wird, das in dem Befestigungsstab (9) eingerichtet ist, und von einer Indexraste (15), die in der Hülse (11) eingerichtet ist, wobei die Befestigungsvorrichtung (10) eine Winkeleinstellungsvorrichtung (16) aufweist, ***dadurch gekennzeichnet,* dass** die Winkeleinstellungsvorrichtung (16) mindestens eine zusätzliche Aufnahme (17) umfasst, die in Bezug auf die Aufnahme (13) höhen- und winkelmäßig versetzt ist.

2. Vorrichtung nach Anspruch 1, ***dadurch gekennzeichnet,* dass** mindestens jener Teil des Befestigungsstabs (9), der dazu bestimmt ist, mit der Hülse (11) zusammenzuwirken, über einen runden Querschnitt verfügt.

3. Vorrichtung nach Anspruch 1 oder 2, ***dadurch gekennzeichnet,* dass** der Winkelversatz der zusätzlichen Aufnahme (17) in Bezug auf die Aufnahme (13) zwischen 0° und 15° beträgt.

4. Vorrichtung nach irgendeinem der Ansprüche 1 bis 3, ***dadurch gekennzeichnet,* dass** die zusätzliche Aufnahme (17) von einem zusätzlichen Loch (18) und von einem Einstellloch (19) gebildet wird, wobei die Mitte des Vorbohrlochs (14) und des zusätzlichen Lochs (18) auf der Achse des Befestigungsstabs (9) oder auf einer Stirnebene des Befestigungsstabs (9) ausgerichtet sind, und dass die Mitte der Indexraste (15) und des Einstelllochs (19) auf einer Geraden angeordnet sind, die in Bezug auf die Achse des Befestigungsstabs (9) geneigt ist.

5. Vorrichtung nach Anspruch 4, ***dadurch gekennzeichnet,* dass** die Gerade, die durch die Mitte der Indexraste (15) und die Mitte des Einstelllochs (19) verläuft, in Bezug auf die Achse des Befestigungsstabs (9) nach vorne geneigt ist.

6. Vorrichtung nach irgendeinem der Ansprüche 1 bis 5, ***dadurch gekennzeichnet,* dass** die Winkeleinstellungsvorrichtung (16) mindestens zwei zusätzliche Aufnahmen (17) umfasst, die in Bezug auf die Aufnahme (13) höhen- und winkelmäßig versetzt sind.

7. Vorrichtung nach Anspruch 6, ***dadurch gekennzeichnet,* dass** die Aufnahme (13) zwischen zwei zusätzlichen Aufnahmen (17) angeordnet ist.

8. Vorrichtung nach irgendeinem der Ansprüche 1 bis 7, ***dadurch gekennzeichnet,* dass** die Achse des Befestigungsstabs (9) nahe der Spitze der Einbettvorrichtung (1) liegt.

9. Vorrichtung nach irgendeinem der Ansprüche 1 bis 8, ***dadurch gekennzeichnet,* dass** die Befestigungsvorrichtung (10) eine Höheneinstellungsvorrichtung (20) umfasst und dass die Winkeleinstellungsvorrichtung (16) unabhängig von der Höheneinstellungsvorrichtung (20) betätigbar ist, um die Höhe und den Anstellwinkel der Einbettvorrichtung (1) unabhängig voneinander einzustellen.

10. Vorrichtung nach Anspruch 9, ***dadurch gekennzeichnet,* dass** die Höheneinstellungsvorrichtung (20) im Wesentlichen hinter der Winkeleinstellungsvorrichtung (16) angeordnet ist, bezüglich der Vorschubrichtung (A).

11. Pflug, der vor jedem Pflugkörper (3) mit einer Einbettvorrichtung (1) nach irgendeinem der Ansprüche 1 bis 10 ausgestattet ist.

12. Pflug nach Anspruch 11, ***dadurch gekennzeichnet,* dass** er drehbar ist.

13. Pflug nach Anspruch 11 oder 12, ***dadurch gekennzeichnet,* dass** er ein Gestell (6) umfasst, das Pflugkörper (3) mittels eines jeweiligen Pflugbalkens (7) trägt, und dass die Einbettvorrichtung (1) auf dem Pflugbalken (7) über einen Bügel (21) und eine Auflage (22) befestigt ist.

## Claims

1. Burying device (1) for a plough (2) that can act in connection with a plough body (3) to bury vegetation and surface debris in the plough furrow, the burying device (1) including a fastening rod (9) and being able to be mounted directly or indirectly on the frame (6) of a plough (2) using a fastening device (10) including a sleeve (11) and a locking element (12) enabling the fastening rod (9) to be rigidly fastened to the sleeve (11) by crossing at least partially a housing (13), the housing (13) being comprised of a pilot hole (14) in the fastening rod (9) and of an index hole (15) in the sleeve (11), the fastening device (10) having an angular adjustment device (16), ***characterised in* that** the angular adjustment device (16) includes at least one additional housing (17) that is offset in terms of height and angle relative to the housing (13).

2. Device according to claim 1, ***characterised in* that** at least the part of the fastening rod (9) intended to cooperate with the sleeve (11) has a circular cross section.

3. Device according to claim 1 or 2, ***characterised in* that** the angular offset of the additional housing (17) relative to the housing (13) is between 0° and 15°.

4. Device according to any one of the claims 1 to 3, ***characterised in* that** the additional adjustment (17) is comprised of an additional hole (18) and of an adjustment hole (19), the centres of the pilot hole (14) and of the additional hole (18) being aligned with the axis of the fastening rod (9) or with a generating line of the fastening rod (9), and the centres of the index hole (15) and of the adjustment hole (19) being positioned on a line tilted relative to the axis of the fastening rod (9).

5. Device according to claim 4, ***characterised in* that** the line passing through the centre of the index hole (15) and the centre of the adjustment hole (19) is tilted forwards relative to the axis of the fastening rod (9).

6. Device according to any one of the claims 1 to 5, ***characterised in* that** the angular adjustment device (16) includes at least two additional housings (17) that are offset in terms of height and angle relative to the housing (13).

7. Device according to claim 6, ***characterised in* that** the housing (13) is positioned between two additional housings (17).

8. Device according to any one of the claims 1 to 7, ***characterised in* that** the axis of the fastening rod (9) is close to the tip of the burying device (1).

9. Device according to any one of the claims 1 to 8, ***characterised in* that** the fastening device (10) includes a height adjustment device (20) and that the angular adjustment device (16) can be operated independently of the height adjustment device (20) in order to adjust, independently, the height and pitch angle of the burying device (1).

10. Device according to claim 9, ***characterised in* that** the height adjustment device (20) is substantially positioned behind the angular adjustment device (16) with regard to the direction of advance (A).

11. Plough equipped, in front of each plough body (3), with a burying device (1) according to any one of the claims 1 to 10.

12. Plough according to claim 11, ***characterised in* that** it is reversible.

13. Plough according to claim 11 or 12, ***characterised in* that** it includes a frame (6) carrying plough bodies (3) by means of a respective plough beam (7) and that the burying device (1) is fastened to the plough beam (7) via a clevis (21) and a support (22).
